# EUROPEAN PATENT SPECIFICATION

(11) **EP 3 336 592 B1**
(45) Date of publication and mention of the grant of the patent: **23.03.2022**
(21) Application number: 16204174.3
(22) Date of filing: 14.12.2016
(51) Int. Cl.: G02B 6/38, G02B 6/42, G02B 6/44

(54) **FLAMEPROOF OPTICAL FIBER CONNECTION ASSEMBLY**
FLAMMFESTE GLASFASERVERBINDUNGSANORDNUNG
ENSEMBLE DE CONNEXION DE FIBRES OPTIQUES IGNIFUGÉES

(43) Date of publication of application: 20.06.2018
(73) Proprietor: Caterpillar Global Mining Europe GmbH, 44534 Lünen (DE)
(72) Inventor: Schwarz, Norbert, 45665 Recklinghausen (DE); Titschert, Jens, 44532 Lünen (DE); Mattern, Jochen, 32657 Lemgo (DE)
(74) Representative: Novagraaf Group

(56) References cited:
- AU-A1- 2009 210 391
- FR-A1- 2 520 124
- U.S Government Publishing Office (gpo): "30 CFR 18.31 - Enclosures-joints and fastenings", 18.29 Access openings and covers, 1 July 2014 (2014-07-01), XP055358996, Retrieved from the Internet: URL:https://www.gpo.gov/fdsys/pkg/CFR-2014 -title30-vol1/pdf/CFR-2014-title30-vol1-se c18-31.pdf [retrieved on 2017-03-27]
- "DIN EN 60079-1 / Explosiongefärendete Bereiche - Teil 1: Geräteschutz durch druckfeste Kapselung d (IEC 60079-1:2014) / Explosive atmospheres- Part 1: Equipment protection by flameproof enclosures d (IEC 60079-1:2014) - German Version EN 60079-1:2014", DEUTSCHE NORMEN. DIN NORM,, vol. DIN EN 60079-1, 1 April 2015 (2015-04-01), page 101pp, XP009189709,

## Description

### Technical Field

The present disclosure generally relates to a flameproof optical fiber connection assembly and, in particular, to a flameproof optical fiber connection assembly used in underground mining applications.

### Background

In some environments, the use of conventional connectors such as plug and socket arrangements may pose a safety risk, if the conventional connectors are positioned in an environment within which explosive or flammable substances such as flammable gases or fine powders may be present. These environments may be present, for example, in underground mining applications and could be termed areas at risk of explosion, or more generally hazardous areas. When conventional connectors are used in such hazardous areas, a spark may jump between the connectors' respective contacts. The spark may ignite the explosive or flammable substances in the surrounding environment, causing a fire or an explosion.

Thus, to prevent fires or explosions in such hazardous areas, so-called flameproof connections are used which provide safety features to prevent sparks and the like from coming into contact with the explosive or flammable substances in the surrounding environment, Recently there has been a need for not only providing flameproof electrically connectors but also flameproof optical connectors to safely transmit optical data.

FR 2 520 124 A1 discloses an optical fiber fitting for a flame proof box. The optical fiber fitting comprises a block which carries an optical fiber through a wall of the flame-proof box and a long cylindrical body made, for example, of brass, with a shoulder at one end, and the other end threaded. This part is received into a correspondingly threaded hole in the plate through which the fiber is to pass. A bore through the center of the plug carries a capillary tube of external diameter of 4 mm and internal diameter of 0.3 mm, intended to receive the fiber of a diameter of 0.185 mm. To secure the capillary tube in place, part of its external surface is milled. An enlarged part of the capillary tube receives the sleeve of the fiber, with a threaded section forming a screwed joint with the outer surface of this fiber sleeve.

The present disclosure is directed, at least in part, to improving or overcoming one or more aspects of prior systems.

### Summary of the Disclosure

A flameproof optical fiber connection assembly for use in areas at risk of explosion is provided. The flameproof optical fiber connection assembly comprises a first connector having a first optical fiber inlet and a first optical fiber outlet, a second connector having a second optical fiber inlet and a second optical fiber outlet, and a casting-compound free optical fiber connection unit interconnected between the first connector and the second connector and including a plurality of 4 to 12 optical fiber passages, each one being configured to pass therethrough an optical fiber connected to the first optical fiber outlet and the second optical fiber inlet. Each optical fiber passage includes an inner diameter sized to prevent flames or sparks from travelling through the passage and is configured to allow a single optical fiber to pass therethrough. The optical fiber connection unit further includes a plurality of tube members, each tube member including a single optical fiber passage formed as a through-hole within the tube member, and a tube receiving member having a plurality of through-bores, each through-bore being configured to receive one tube member. Each one of the plurality of through-bores is a stepped bore including a first bore section on a side facing the first connector and a second bore section on a side facing the second connector, wherein the first bore section includes an inner diameter larger than an outer diameter of the tube member and the second bore section includes an inner diameter smaller than the outer diameter of the tube member.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 is a schematic three-dimensional view of an exemplary flameproof optical fiber connection assembly according to an aspect of the present disclosure;
Fig. 2 is a schematic cross-sectional view through an exemplary flameproof optical fiber connection assembly according to an aspect of the present disclosure;
Fig. 3 is a schematic exploded cross-sectional view through an exemplary flameproof optical fiber connection assembly according to an aspect of the present disclosure;
Fig. 4 is a schematic cross-sectional view through an exemplary tube member of an exemplary optical fiber connection unit of an exemplary flameproof optical fiber connection assembly;
Fig. 5 is a schematic cross-sectional view through an exemplary tube receiving member of an exemplary optical fiber connection unit of an exemplary flameproof optical fiber connection assembly; and
Fig. 6 is a schematic side view of an exemplary tube receiving member of an exemplary optical fiber connection unit of an exemplary flameproof optical fiber connection assembly.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that conventional flameproof optical fiber connection assemblies use a casting-compound or flame retardant resin to provide the flameproof feature.

Within the meaning of the present disclosure the term "flameproof' describes the ability of a component to withstand an occurring explosion pressure. A "flameproof encapsulation" or "flameproof housing" may, for example, allow a source of ignition inside the encapsulation or housing, but in case an explosion occurs, the explosion is contained within the flameproof encapsulation/housing and does not spread towards the outside of the flameproof encapsulation/housing.

It was also realized that by using a casting-compound or flame retardant resin for providing the flameproof feature, cladded and coated optical fibers have to be used because the cladding and coating of the optical fiber prevents a thermal damage of the optical fiber's glass core within the casting-compound or flame retardant resin. It was further realized that if optical fibers with cladding and coating are used, a maximal bending angle of the optical fiber is limited. It was found that optical fibers with cladding and coating allow for a maximal bending angle of about 40° which increases installation space of a flameproof optical fiber connection assembly. It was also realized that at the transition between an area including the casting-compound or flame retardant resin and an area without the casting-compound or flame retardant resin, the optical fiber may be subjected to kinks which may damage the glass core. It was also realized that by using a casting-compound or flame retardant resin, replacement of a damaged optical fiber is virtually impossible without exchanging the entire flameproof optical fiber connection assembly.

The present disclosure is further based in part on the realization that the flameproof feature of an optical fiber connection assembly can also be provided when an optical fiber connection unit is used that includes at least one optical fiber passage having an inner diameter sized to prevent sparks or flames from passing through the optical fiber passage. The optical fiber passage is further sized to be large enough to allow an optical fiber to run through the optical fiber passage.

The present disclosure is further based in part on the realization that a suitable value for a (maximal) inner diameter of the optical fiber passage needs to comply with the standards of IEC 60079-1 or 30 CFR 18.31 for intrinsic safety of electric equipment. A typical value for the inner diameter is, for example, in a range between about 180 micrometers and about 250 micrometers.

The present disclosure is further based in part on the realization that an optical fiber passage having a suitable inner diameter is provided by a combination of a tube member having a through-hole with the suitable inner diameter and a tube receiving member having a through-bore configured to receive the tube member. By providing a combination of tube member and tube receiving member, the tube receiving member functions as a holding member for the tube member. In addition, by providing the optical fiber passage as a through-hole within a tube member, manufacturing complexity is reduced compared to a through-hole formed within a solid block. The reason for this is that the tube member can be drawn to form the optical fiber passage.

The present disclosure is further based in part on the realization that the tube receiving member can be provided with a plurality of through-bores, wherein each through-bore is configured to receive a tube member thereby providing a plurality of optical fiber passages than each include the flameproof feature.

The present disclosure is further based in part on the realization that the plurality of through-bores may be arranged in a circumferential direction about the tube receiving member so that the plurality of optical fiber passages is provided in a drum-revolver-like manner.

The present disclosure is further based in part on the realization that the flameproof optical fiber connection assembly may include a first connector including a bore for receiving the optical fiber connection unit, and a second connector connected to the first connector so that the optical fiber connection unit is accommodated within the first and second connectors.

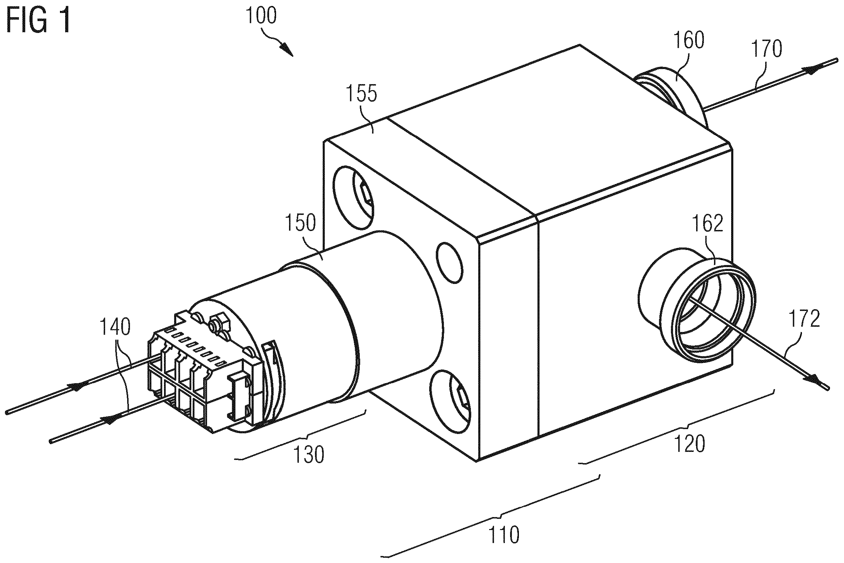

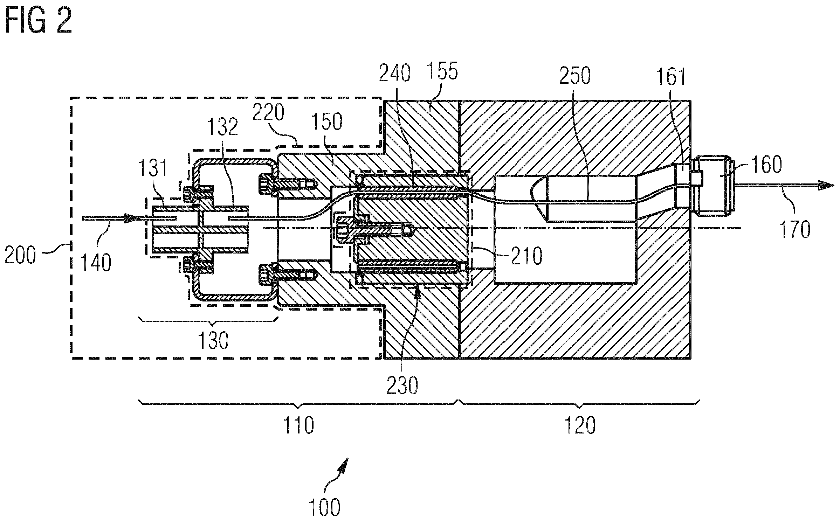

Referring now to the drawings, Fig. 1 shows a three-dimensional view of an exemplary flameproof optical fiber connection assembly 100 including a first connector 110 and a second connector 120. First connector 110 is configured to be connected, for example, to a flameproof housing (indicated by dashed box 200 in Fig. 2) of a machine used for working in an area at risk of explosion. Second connector 120 is configured to be connected to an optical fiber station. Optical fiber station is configured to receive and/or analyze optical data provided by the machine and may be a conventional, i.e. non-flameproof component.

As can be seen in Fig. 1, first connector 110 includes an optical fiber receiving unit 130 configured to receive optical fibers 140 of flameproof housing 200, an annular protrusion 150 configured to receive optical fiber receiving unit 130, and a flange 155 connected to annular protrusion 150. Flange 155 is further connected to second connector 120. Second connector 120 includes at least one optical fiber outlet 160, 162 connected to optical fibers 170, 172 which, in turn, are connected to the optical fiber receiving station.

Flameproof optical fiber connection assembly 100 further includes an optical fiber connection unit (item 210 in Fig. 2) interconnected between first connector 110 and second connector 120. Optical fiber connection unit 210 is configured to provide an optical connection between optical fiber receiving unit 130 and the optical fiber outlets 160, 162. In addition, as will be explained in connection with Figs. 2 to 6, optical fiber connection unit 210 is configured to prevent sparks or flames from travelling between first connector 110 and second connector 120 yet allowing changes in air pressure. Thus, by providing optical fiber connection unit 210, flameproof optical fiber connection assembly 100 ensures a flameproof optical data communication between optical fibers 140 of a flameproof housing 200 of a machine used for working in an area at risk of explosion and optical fibers 170 connected to a conventional, i.e. non-flameproof optical fiber station.

As can be further seen in Fig. 1, optical fiber receiving unit 130 and optical fiber outlet 162 are arranged at an angle of about 90° to one another. Thus, flameproof optical fiber connection assembly 100 not only ensures a flameproof optical data communication, but also provides the possibility to transmit optical data at an angle of up to about 90° between an optical data inlet (optical fibers 140) and an optical data outlet (optical fiber 172). An angle of about 90° is particularly advantageous as the installation space of flameproof optical fiber connection assembly 100 can be reduced.

Referring now to Fig. 2, a schematic cross-sectional view through flameproof optical fiber connection assembly 100 is shown. Elements already explained in connection with Fig. 1 have the same reference numerals such as first connector 110 and second connector 120.

As can be seen in Fig. 2, first connector 110 is connected to flameproof housing 200 via flange 155.

Flameproof housing 200 includes a bore 220 configured to receive annular protrusion 150. A width and a length of a gap provided between an outer circumferential face of annular protrusion 150 and an inner circumferential face of bore 220 are selected such that sparks created within flameproof housing 200 are extinguished within the gap. For example, a depth of bore 220 may be larger than about 25 mm (25 millimeters), particularly larger than about 25.4 mm, an inner diameter of bore 220 may be in a range between about 40 mm and 40.35 mm, a length of annular protrusion 150 may be larger than about 25 mm, particularly larger than about 25.4 mm, for example, about 29 mm, and an outer diameter of annular protrusion 150 may be in a range between about 40 mm and about 40.1 mm. Suitable values can be obtained from the standards of IEC 60079-1 or 30 CFR 18.31.

Because the length and the outer diameter of annular protrusion 150 are sized such that the gap between the outer circumferential face of annular protrusion 150 and the inner circumferential face of bore 220 effectively prevents sparks from leaving the gap, first connector 110 may also be termed a "flameproof connector".

A person skilled in the art will understand that flameproof housings 200 with bores 220 are readily available from appropriate manufacturers. Thus, a length and an outer diameter of annular protrusion 150 can readily be adapted so that a flameproof connection between first connector 110 and flameproof housing 200 is ensured.

First connector 110 and flameproof housing 200 are made from a material having a high thermal conductivity so that a thermal energy of a spark within the gap can be transferred away from the gap, thereby extinguishing the spark. A suitable material of first connector 110 and flameproof housing 200 may be metal, in particular brass.

Annular protrusion 150 is further connected to optical fiber receiving unit 130. Optical fiber receiving unit 130 includes an optical fiber inlet 131 (example of a first optical fiber inlet) and an optical fiber outlet 132 (example of a first optical fiber outlet). Optical fiber inlet 131 is connected to optical fibers 140. Optical fiber outlet 132 is connected to optical fiber inlet 131.

Second connector 120 is connected to first connector 110 via flange 155. Second connector 120 includes at least one optical fiber outlet 160 (example of a second optical fiber outlet) and at least one optical fiber inlet 161 (example of a second optical fiber inlet) connected to optical fiber outlet 160.

Optical fiber connection unit 210 is interconnected between first connector 110 and second connector 120. First connector 110 includes a bore 230 configured to receive optical fiber connection unit 210. A width and a length of a gap provided between an outer circumferential face of optical fiber connection unit 210 and an inner circumferential face of bore 230 are selected such that sparks created within bore 230 are extinguished within the gap. For example, a depth of bore 230 may be larger than about 25 mm, particularly larger than about 25.4 mm, an inner diameter of bore 230 may be about 30 mm, a length of optical fiber connection unit 210 may be larger than about 25 mm, particularly larger than about 25.4 mm, for example, 31 mm, and an outer diameter of optical fiber connection unit 210 may be about 30 mm. Suitable values can be obtained from the standards of IEC 60079-1 or 30 CFR 18.31. An outer diameter of optical fiber connection unit 210 and an inner diameter of bore 230 may further be adapted to allow insertion and removal of optical fiber connection unit 210 into and out of bore 230.

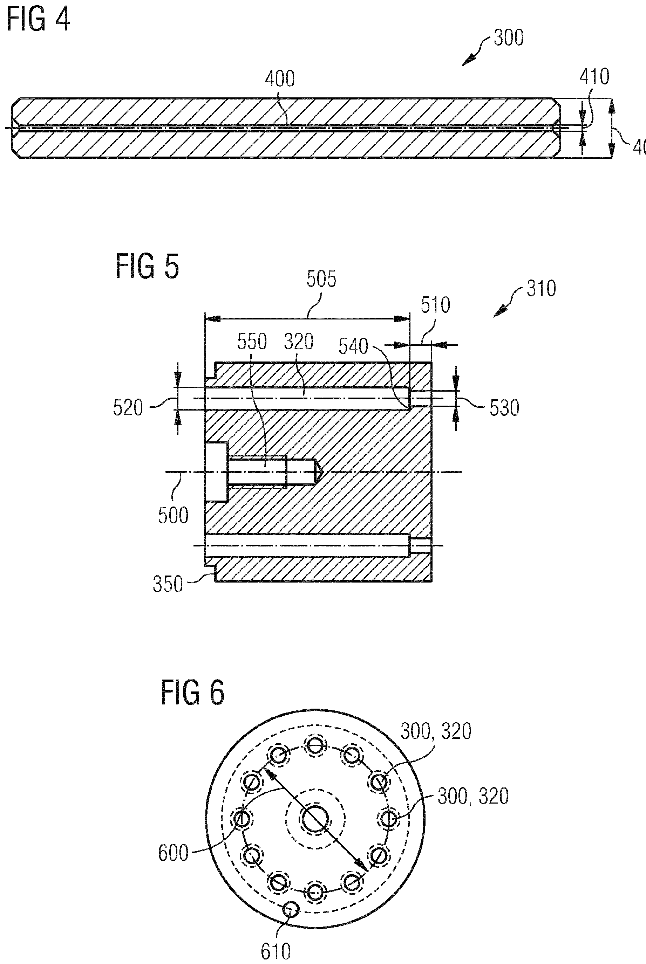

Optical fiber connection unit 210 includes at least one optical fiber passage 240. Optical fiber passage 240 includes an inner diameter sized such that an optical fiber 250 can run through optical fiber passage 240 to connect optical fiber outlet 132 to optical fiber inlet 161. The inner diameter of optical fiber passage 240 is further sized such that flames or sparks are prevented from travelling through optical fiber passage 240 for providing a flameproof feature. Further details with respect to the inner diameter of optical fiber passage 240 and the flameproof feature of optical fiber connection unit 210 will be given when referring to Fig. 4.

As an example not forming part of the invention, optical fiber connection unit 210 may be a block and optical fiber passage 240 may be formed as a through-hole in the block.

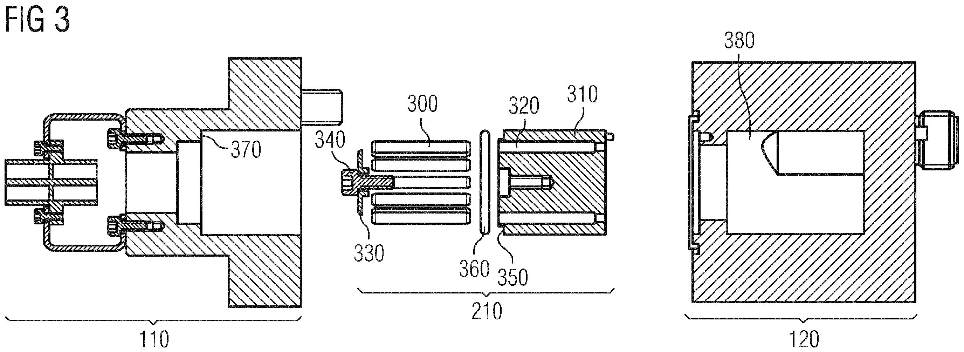

Referring to Fig. 3, a schematic exploded cross-sectional view through flameproof optical fiber connection assembly 100 is shown. Elements already explained in connection with Fig. 2 such as the first connector 110 and the second connector 120 have the same reference numerals.

In Fig. 3, a further embodiment of optical fiber connection unit 210 is shown. In this embodiment, optical fiber connection unit 210 includes a plurality of tube members 300 inserted into a plurality of through-bores 320 provided in a tube receiving member 310. Tube receiving member 310 functions as a holding member for the plurality of tube members 300. Each tube member 300 further includes a through-hole 400 (see Fig. 4) which functions as the optical fiber passage 240. Each through-bore 320 of tube receiving member 310 is configured to receive one tube member 300. Tube members 300 are inserted into through-bores 320 and are axially fixed within through-bores 320 using a fixing disc 330. Fixing disc 330 is mounted to a front face of tube receiving member 310 using a screw 340, as will be explained in connection with Fig. 5.

Tube receiving member 310 further includes an annular recess 350 on a front face of tube receiving member 310. Annular recess 350 function as a seating face for an alignment ring 360. When tube members 300 are inserted into through-bores 320, alignment ring 360 may contact a shoulder 370 of bore 230 of first connector 110 for aligning optical fiber connection unit 210 within bore 230.

Second connector 120 further includes a cavity 380. Cavity 380 may be formed as a bore and provides a space within second connector 120 so that optical fibers 250 connecting optical fiber outlets 132 to optical fiber inlets 161 can be bent, in particular, when the optical fiber inlet 161 is arranged at an angle with respect to the optical fiber outlet 132.

Referring now to Fig. 4, a schematic cross-sectional view through tube member 300 is shown. Tube member 300 may have a length in a range between about 25 mm and about 28 mm and an outer diameter 405 of about 3 mm. Tube member 300 includes a central through-hole 400 which functions as the optical fiber passage 240. An inner diameter 410 of through-hole 400, or more generally an inner diameter 410 of optical fiber passage 240, is sized such that flames or sparks are prevented from travelling through optical fiber passage 240. At the same time, inner diameter 410 is sized such that optical fiber 250 can run through optical fiber passage 240. A maximal inner diameter 410 which still prevents sparks and flames from travelling through optical fiber passage 240 can be determined using the standard of IEC 60079-1 or 30 CFR 18.31 for intrinsic safety of electric equipment. For a given length in a range between about 25 mm and about 28 mm, optical fiber passage 240 may have an inner diameter 410 in a range between about 180 micrometers and about 250 micrometers.

Moreover, as inner diameter 410 is small enough to prevent flames or sparks from travelling through optical fiber passage 240, no casting-compound or flame retardant resin is necessary to provide to the flameproof feature of optical fiber connection unit 210. As no casting-compound or flame retardant resin is necessary, optical fiber 250 does not need to be thermally shielded. Hence, optical fiber 250 can run through optical fiber passage 240 without cladding or coating.

The use of an optical fiber without cladding or coating also comes at the advantage that the bending angle of optical fiber 250 can be increased. Typically, a maximal bending angle of an optical fiber with cladding and coating is about 40°. Whereas when no cladding or coating is used, i.e. when only the glass core of optical fiber 250 is used, a maximal bending angle of about 90° can be used. The reason for increasing the bending angle when using an unsheathed optical fiber compared to a sheathed fiber is that cladding and coating impose a high mechanical stress on the glass core causing a damage to the glass core during bending of the optical fiber. Thus, by omitting casting-compounds or flame retardant resins, it is possible to connect an optical fiber outlet, such as optical fiber outlet 132, with an optical fiber inlet, such as optical fiber inlet 161, that are arranged at an angle of about 90° to one another.

Moreover, the glass core of an optical fiber typically includes an outer diameter of about 5 to 150 micrometers. On the other hand, the inner diameter 410 of optical fiber passage 240 which still ensures the flameproof feature is significantly larger than the outer diameter of optical fiber 250. Hence, optical fiber 250 can run through optical fiber passage 240 freely, that is without stress or strain exerted on the glass core, so that the lifetime of optical fiber 250 can be increased.

In addition, as a casting-compound or flame retardant resin is not necessary, no kinks occur at the transition between an area including casting-compound or flame retardant resin and an area with no casting-compound or flame retardant resin. Hence, the integrity of optical fiber 250, in particular its glass core, is increased.

Moreover, as optical fiber 250 can run through optical fiber passage 240 freely, in case optical fiber 250 is damaged, optical fiber 250 can easily be replaced.

Furthermore, the use of a casting-compound or flame retardant resin requires additional certification in order to be awarded the flameproof feature. When, on the other hand, optical fiber passage 240 is used, no additional certification for a casting-compound or flame retardant is needed, saving time and money until the flameproof feature is awarded.

Referring now to Fig. 5, a schematic cross-sectional view through tube receiving member 310 is shown. Tube receiving member 310 includes a cylindrical body having an axial direction 500 and a circumferential direction perpendicular to the axial direction 500. As can be further seen, through-bore 320 is a stepped bore including a first bore section 505 and a second bore section 510 connected to first bore section 505. First bore section 505 is arranged on a side facing first connector 110. Second bore section 510 is arranged on a side facing second connector 120. First bore section 505 includes an inner diameter 520 that is larger than outer diameter 405 of tube member 300. Second bore section 510 includes an inner diameter 530 that is smaller than outer diameter 405 (but large enough to allow optical fiber 250 to pass through second bore section 510). Because inner diameter 520 of first bore section 505 is larger than inner diameter 530 of second bore section 510, through-bore 320 includes a shoulder 540 at the transition between first bore section 505 and second bore section 510.

Shoulder 540 functions as a stop, when tube member 300 is inserted into through-bore 320. As a result, tube member 300 can only be moved in axial direction 500 until a front face of tube member 300 abuts shoulder 540. Shoulder 540 is arranged in axial direction 500 such that almost the entire length of tube member 300 is accommodated within first bore section 505. This ensures a maximal axial overlap between tube member 300 and tube receiving member 310.

As can be further seen in Fig. 5, tube receiving member 310 further includes a threaded bore 550 configured to receive screw 340 so that fixing disc 330 can provide an axial force on a front face of tube member 300 from a first connector 110 side. Shoulder 540 and fixing disc 330 provide a fixing means for tube members 300 within through-bores 320. An outer diameter of fixing disc 330 may be such that an outer rim of fixing disc at least partly overlaps with a front face of tube members 300.

Referring to Fig. 6, a schematic side view of tube receiving member 310 is shown. Fig. 6 shows the front face of tube receiving member 310 facing second connector 120. As can be seen, tube receiving member 310 includes 12 through-bores 320 arranged in circumferential direction. Through-bores 320 are evenly distributed about the circumference in a drum-revolver-like manner. Each through-bore 320 accommodates a tube member 300 through which a single, unsheathed optical fiber 250 can pass. As a result, 12 unsheathed optical fibers 250 can pass through optical fiber connection unit 210 and can connect optical fiber outlet 132 to optical fiber inlet 161 under various connecting angles.

By using a plurality of through-bores 320, more flexibility in connecting optical fiber outlet 132 to optical fiber inlet 161 is provided. At the same time, the flameproof feature of optical fiber connection unit 210 is ensured.

A person skilled in the art will understand, that tube receiving member 310 may of course include less than 12 through-bores 320. For example, tube receiving member 310 may include at least 4 through-bores 320.

Although through-bores 320 are shown to be arranged on a common circle 600, a person skilled in the art will understand that through-bores 320 may be arranged with different radial distances from a central axis of tube receiving member 310. Also, through-bores 320 do not necessarily have to be evenly distributed around the circumference of tube receiving member 310.

In case one or more through-bores 320 of the plurality of through-bores 320 are not used for optical data communication, the respective through-bore 320 could also be closed using a plug.

Tube receiving member 310 further includes a hole 610 configured to receive a centering pin (not shown). The centering pin can be inserted into a corresponding bore provided on a front face of second connector 120 for fixing tube receiving member 310 in circumferential direction within a second connector 120.

Tube receiving member 310 and tube member 300 may be made from a material having a high thermal conductivity so that a thermal energy of a spark or a flame within through-hole 400 (an example of optical fiber passage 240) can be transferred away from optical fiber passage 240, thereby extinguishing the spark or the flame within optical fiber passage 240. A suitable material of tube receiving member 310 and tube member 300 may be metal, in particular brass.

### Industrial Applicability

In the following, assembling of flameproof optical fiber connection assembly 100 will be explained in connection with Figs. 1 to 6.

Optical fibers 140 of flameproof housing 200 are connected to optical fiber inlets 131 of first connector 110. First connector 110 is then connected to flameproof housing 200 via flange 155.

Next, unsheathed optical fibers 250 are connected to optical fiber outlets 132. A part of the optical fibers 250 extending between optical fiber outlet 132 and optical fiber connection unit 210 may be wrapped with textile or cloth to protect the glass core from being damaged.

Next, optical fiber connection unit 210 is assembled by inserting tube members 300 into through-bores 320 and axially fixing tube members 300 by tightening screw 340. Then, optical fibers 250 are run through through-holes 400 of tube members 300. Of course, it is also possible that first optical fibers 250 are run through tube members 300 and then tube members 300 are inserted into through-bores 320.

Next, optical fiber connection unit 210 is inserted into bore 230 and aligned within bore 230 using alignment ring 360.

Next, optical fibers 250 are connected to optical fiber inlets 161. If an optical fiber inlet 161 is arranged at an angle with respect to an optical fiber outlet 132, optical fibers 250 may be bent within cavity 380. Because optical fibers 250 run through optical fiber passage 240 unsheathed, optical fibers 250 may be bent by up to 90°.

Next, the second connector 120 is attached to first connector 110 via flange 155.

Next, optical fibers 170 of the optical fiber station can be connected to optical fiber outlets 160, 162 for providing an optical data connection between flameproof housing 200 and the optical fiber station.

Of course, the above assembling steps as well as the succession of the assembling steps may be varied and/or adapted suited to the task at hand.

As optical fiber passage 240 is sized such that sparks or flames are prevented from travelling through optical fiber passage 240, optical fiber connection unit 210 does not require a casting-compound or a flame retardant resin for providing the flameproof feature. Hence, optical fiber connection unit 210 is a casting-compound free and flame retardant resin free optical fiber connection unit 210.

By omitting a casting-compound or a flame retardant resin, optical fibers without cladding or coating can be used. This allows a higher bending angle, because the strain exerted by the cladding and the coating onto the glass fiber core is omitted. As a result, flameproof optical fiber connection assembly 100 can be used to connect an optical fiber inlet to an optical fiber outlet at an angle of up to about 90° to one another. This is particularly advantageous because an axial length of the flameproof optical fiber connection assembly 100 can be reduced so that less installation space is required.

It is to be understood that the value to which the modifier "about" refers is itself also specifically, and preferably, disclosed. The recitation of numerical ranges by endpoints includes all numbers and fractions subsumed within the respective ranges, as well as the recited endpoints.

Although the preferred embodiments of this invention have been described herein, improvements and modifications may be incorporated without departing from the scope of the following claims.

## Claims

1. A flameproof optical fiber connection assembly (100) for use in areas at risk of explosion, comprising:
a first connector (110) having a first optical fiber inlet (131) and a first optical fiber outlet (132);
a second connector (120) having a second optical fiber inlet (161) and a second optical fiber outlet (160); and
a casting-compound free optical fiber connection unit (210) interconnected between the first connector (110) and the second connector (120) and including
a plurality of 4 to 12 optical fiber passages (240), each one of the optical fiber passages (24) being configured to pass therethrough an optical fiber (250) connected to the first optical fiber outlet (132) and the second optical fiber inlet (161), each one of the plurality of optical fiber passages (240) including an inner diameter sized to prevent flames or sparks from travelling through the passage (240) and each one of the plurality of optical fiber passages (240) being configured to allow a single optical fiber (250) to pass therethrough;
a plurality of tube members (300), each tube member (300) including a single optical fiber passage (240) formed as a through-hole (400) within the tube member (300); and
a tube receiving member (310) having a plurality of through-bores (320), each through-bore (320) being configured to receive one tube member (300),
wherein each one of the plurality of through-bores (320) is a stepped bore including a first bore section (505) on a side facing the first connector (110) and a second bore section (510) on a side facing the second connector (120), wherein the first bore section (505) includes an inner diameter (520) larger than an outer diameter (405) of the tube member (300) and the second bore section (510) includes an inner diameter (530) smaller than the outer diameter (405) of the tube member (300).

2. The flameproof optical fiber connection assembly (100) of claim 1, further comprising:
optical fibers (250) extending through each one of the plurality of optical fiber passages (240) and being connected to the first optical fiber outlet (132) and the second optical fiber inlet (161).

3. The flameproof optical fiber connection assembly (100) of any one of the preceding claims, wherein each one of the plurality of optical fiber passages (240) includes an inner diameter in a range between about 180 micrometers and about 250 micrometers and a length in a range between about 25 millimeters and 28 millimeters.

4. The flameproof optical fiber connection assembly (100) of any one of the preceding claims, wherein each one of the plurality of optical fiber passages (240) includes an inner diameter large enough to allow a single unsheathed optical fiber (250) to extend through the passage (240).

5. The flameproof optical fiber connection assembly (100) of any one of the preceding claims, wherein the plurality of tube members (300) and/or the tube receiving member (310) are formed from a high thermal conductivity material such as metal, particularly brass.

6. The flameproof optical fiber connection assembly (100) of any one of the preceding claims, wherein the tube receiving member (310) includes a cylindrical body having an axial direction (500) and a circumferential direction perpendicular to the axial direction (500), and the plurality of through-bores (320) is a plurality of 4 to 12 through-bores (320) extending in the axial direction (500) and being distributed in the circumferential direction, preferably being evenly distributed in the circumferential direction.

7. The flameproof optical fiber connection assembly (100) of any one of the preceding claims, wherein the tube receiving member (310) includes a cylindrical body having an axial direction (500), the plurality of through-bores (320) extends in the axial direction (500), and the optical fiber connection unit (210) further includes a fixing disc (330) configured to axially fix the plurality of tube members (300) within the plurality of through-bores (320).

8. The flameproof optical fiber connection assembly (100) of any one of the preceding claims, wherein the first connector (110) includes a bore (230) configured to receive the optical fiber connection unit (210).

9. The flameproof optical fiber connection assembly (100) of any one of the preceding claims, wherein the first connector (110) is a flameproof connector including a flange (155) and an annular protrusion (150) extending from the flange (155) and being configured to be connected to a flameproof housing.

10. The flameproof optical fiber connection assembly (100) of any one of the preceding claims, wherein the first optical fiber outlet (132) and the second optical fiber inlet (161) are arranged at an angle of about 90° to one another.

## Patentansprüche

1. Feuerfeste Lichtwellenleiter-Verbindungsanordnung (100) zur Verwendung in explosionsgefährdeten Bereichen, umfassend:
einen ersten Verbinder (110), welcher einen ersten Lichtwellenleiter-Einlass (131) und einen ersten Lichtwellenleiter-Auslass (132) aufweist;
einen zweiten Verbinder (120), welcher einen zweiten Lichtwellenleiter-Einlass (161) und einen zweiten Lichtwellenleiter-Auslass (160) aufweist; und
eine vergussmassenfreie Lichtwellenleiter-Verbindungseinheit (210) welche zwischen den ersten Verbinder (110) und den zweiten Verbinder (120) geschaltet ist und umfasst:
eine Vielzahl von 4 bis 12 Lichtwellenleiter-Durchlässen (240), wobei jeder der Lichtwellenleiter-Durchlässe (24) dafür konfiguriert ist, dort einen Lichtwellenleiter (250) hindurchzuführen, der mit dem ersten Lichtwellenleiter-Auslass (132) und dem zweiten Lichtwellenleiter-Einlass (161) verbunden ist, wobei jeder der Vielzahl von Lichtwellenleiter-Durchlässen (240) einen Innendurchmesser aufweist, der so bemessen ist, dass verhindert wird, dass Flammen oder Funken durch den Durchgang (240) gelangen, und jeder der Vielzahl von Lichtwellenleiter-Durchlässen (240) so konfiguriert ist, dass ermöglicht wird, dass ein einzelner Lichtwellenleiter (250) dort hindurchgeführt wird;
eine Vielzahl von Rohrelementen (300), wobei jedes Rohrelement (300) einen einzelnen Lichtwellenleiter-Durchlass (240) aufweist, welcher als ein Durchgangsloch (400) innerhalb des Rohrelements (300) ausgebildet ist; und
ein Rohraufnahmeelement (310), welches eine Vielzahl von Durchgangsbohrungen (320) aufweist, wobei jede Durchgangsbohrung (320) dafür konfiguriert ist, ein Rohrelement (300) aufzunehmen,
wobei jede der Vielzahl von Durchgangsbohrungen (320) eine abgestufte Bohrung ist, welche einen ersten Bohrungsabschnitt (505) auf einer dem ersten Verbinder (110) zugewandten Seite und einen zweiten Bohrungsabschnitt (510) auf einer dem zweiten Verbinder (120) zugewandten Seite aufweist, wobei der erste Bohrungsabschnitt (505) einen Innendurchmesser (520) aufweist, der größer als ein Außendurchmesser (405) des Rohrelements (300) ist, und der zweite Bohrungsabschnitt (510) einen Innendurchmesser (530) aufweist, der kleiner als der Außendurchmesser (405) des Rohrelements (300) ist.

2. Feuerfeste Lichtwellenleiter-Verbindungsanordnung (100) nach Anspruch 1, ferner umfassend:
Lichtwellenleiter (250), welche sich durch jeden der Vielzahl von Lichtwellenleiter-Durchlässen (240) erstrecken und mit dem ersten Lichtwellenleiter-Auslass (132) und dem zweiten Lichtwellenleiter-Einlass (161) verbunden sind.

3. Feuerfeste Lichtwellenleiter-Verbindungsanordnung (100) nach einem der vorstehenden Ansprüche, wobei jeder der Vielzahl von Lichtwellenleiter-Durchlässen (240) einen Innendurchmesser in einem Bereich von etwa 180 Mikrometer bis etwa 250 Mikrometer und eine Länge in einem Bereich von etwa 25 Millimeter bis 28 Millimeter aufweist.

4. Feuerfeste Lichtwellenleiter-Verbindungsanordnung (100) nach einem der vorstehenden Ansprüche, wobei jeder der Vielzahl von Lichtwellenleiter-Durchlässen (240) einen Innendurchmesser aufweist, der groß genug ist, um zu ermöglichen, dass sich ein einzelner nicht ummantelter Lichtwellenleiter (250) durch den Durchlass (240) erstreckt.

5. Feuerfeste Lichtwellenleiter-Verbindungsanordnung (100) nach einem der vorstehenden Ansprüche, wobei die Vielzahl von Rohrelementen (300) und/oder das Rohraufnahmeelement (310) aus einem Material mit hoher Wärmeleitfähigkeit ausgebildet sind, wie z. B. Metall, insbesondere Messing.

6. Feuerfeste Lichtwellenleiter-Verbindungsanordnung (100) nach einem der vorstehenden Ansprüche, wobei das Rohraufnahmeelement (310) einen zylindrischen Körper einschließt, welcher eine axiale Richtung (500) und eine Umfangsrichtung senkrecht zu der axialen Richtung (500) aufweist, und die Vielzahl von Durchgangsbohrungen (320) eine Vielzahl von 4 bis 12 Durchgangsbohrungen (320) ist, welche sich in der axialen Richtung (500) erstrecken und in der Umfangsrichtung verteilt sind, vorzugsweise gleichmäßig in der Umfangsrichtung verteilt sind.

7. Feuerfeste Lichtwellenleiter-Verbindungsanordnung (100) nach einem der vorstehenden Ansprüche, wobei das Rohraufnahmeelement (310) einen zylindrischen Körper einschließt, welcher eine axiale Richtung (500) aufweist, wobei sich die Vielzahl von Durchgangsbohrungen (320) in der axialen Richtung (500) erstrecken, und die Lichtwellenleiter-Verbindungseinheit (210) ferner eine Fixierscheibe (330) einschließt, welche dafür konfiguriert ist, die Vielzahl von Rohrelementen (300) innerhalb der Vielzahl von Durchgangsbohrungen (320) axial zu fixieren.

8. Feuerfeste Lichtwellenleiter-Verbindungsanordnung (100) nach einem der vorstehenden Ansprüche, wobei der erste Verbinder (110) eine Bohrung (230) aufweist, welche dafür konfiguriert ist, die Lichtwellenleiter-Verbindungseinheit (210) aufzunehmen.

9. Feuerfeste Lichtwellenleiter-Verbindungsanordnung (100) nach einem der vorstehenden Ansprüche, wobei der erste Verbinder (110) ein feuerfester Verbinder ist, welcher einen Flansch (155) und einen ringförmigen Vorsprung (150) einschließt, der sich von dem Flansch (155) aus erstreckt und dafür konfiguriert ist, mit einem feuerfesten Gehäuse verbunden zu werden.

10. Feuerfeste Lichtwellenleiter-Verbindungsanordnung (100) nach einem der vorstehenden Ansprüche, wobei der erste Lichtwellenleiter-Auslass (132) und der zweite Lichtwellenleiter-Einlass (161) in einem Winkel von etwa 90° zueinander angeordnet sind.

## Revendications

1. Ensemble ignifuge de connexion de fibre optique (100) utilisable pour des zones à risque d'explosion, comprenant :
un premier connecteur (110) ayant une première entrée de fibre optique (131) et une première sortie de fibre optique (132) ;
un second connecteur (120) ayant une seconde entrée de fibre optique (161) et une seconde sortie de fibre optique (160) ; et
une unité de connexion de fibre optique sans mélange de coulage (210) interconnectée entre le premier connecteur (110) et le second connecteur (120) et incluant
une pluralité de 4 à 12 passages de fibre optique (240), chacun des passages de fibre optique (24) étant configuré pour faire passer à travers celui-ci une fibre optique (250) connectée à la première sortie de fibre optique (132) et à la seconde entrée de fibre optique (161), chacun de la pluralité de passages de fibre optique (240) incluant un diamètre interne dimensionné pour empêcher des flammes ou des étincelles de circuler à travers le passage (240) et chacun de la pluralité de passages de fibre optique (240) étant configuré pour permettre à une seule fibre optique (250) de passer à travers celui-ci ;
une pluralité d'éléments de tube (300), chaque élément de tube (300) incluant un seul passage de fibre optique (240) formé en guise de trou traversant (400) dans l'élément de tube (300) ; et
un élément de réception de tube (310) ayant une pluralité d'alésages traversants (320), chaque alésage traversant (320) étant configuré pour recevoir un élément de tube (300),
dans lequel chacun de la pluralité d'alésages traversants (320) est un alésage étagé incluant une première section d'alésage (505) sur un côté faisant face vers le premier connecteur (110) et une seconde section d'alésage (510) sur un côté faisant face vers le second connecteur (120), dans lequel la première section d'alésage (505) inclut un diamètre interne (520) plus grand qu'un diamètre externe (405) de l'élément de tube (300) et la seconde section d'alésage (510) inclut un diamètre interne (530) plus petit que le diamètre externe (405) de l'élément de tube (300).

2. Ensemble ignifuge de connexion de fibre optique (100) selon la revendication 1, comprenant en outre :
des fibres optiques (250) s'étendant à travers chacun de la pluralité de passages de fibre optique (240) et étant connectés à la première sortie de fibre optique (132) et à la seconde entrée de fibre optique (161).

3. Ensemble ignifuge de connexion de fibre optique (100) selon l'une quelconque des revendications précédentes, dans lequel chacun de la pluralité de passages de fibre optique (240) inclut un diamètre interne dans une plage entre environ 180 micromètres et environ 250 micromètres et une longueur dans une plage entre environ 25 millimètres et 28 millimètres.

4. Ensemble ignifuge de connexion de fibre optique (100) selon l'une quelconque des revendications précédentes, dans lequel chacun de la pluralité de passages de fibre optique (240) inclut un diamètre interne suffisamment grand pour permettre à une seule fibre optique (250) non gainée de s'étendre à travers le passage (240).

5. Ensemble ignifuge de connexion de fibre optique (100) selon l'une quelconque des revendications précédentes, dans lequel la pluralité d'éléments de tube (300) et/ou l'élément de réception de tube (310) sont formés d'un matériau à haute conductivité thermique tel que du métal, particulièrement du laiton.

6. Ensemble ignifuge de connexion de fibre optique (100) selon l'une quelconque des revendications précédentes, dans lequel l'élément de réception de tube (310) inclut un corps cylindrique ayant une direction axiale (500) et une direction circonférentielle perpendiculaire à la direction axiale (500), et la pluralité d'alésages traversants (320) est une pluralité de 4 à 12 alésages traversants (320) s'étendant dans la direction axiale (500) et étant répartis dans la direction circonférentielle, de préférence étant uniformément répartis dans la direction circonférentielle.

7. Ensemble ignifuge de connexion de fibre optique (100) selon l'une quelconque des revendications précédentes, dans lequel l'élément de réception de tube (310) inclut un corps cylindrique ayant une direction axiale (500), la pluralité d'alésages traversants (320) s'étend dans la direction axiale (500), et l'unité de connexion de fibre optique (210) inclut en outre un disque de fixation (330) configuré pour fixer axialement la pluralité d'éléments de tube (300) dans la pluralité d'alésages traversants (320).

8. Ensemble ignifuge de connexion de fibre optique (100) selon l'une quelconque des revendications précédentes, dans lequel le premier connecteur (110) inclut un alésage (230) configuré pour recevoir l'unité de connexion de fibre optique (210).

9. Ensemble ignifuge de connexion de fibre optique (100) selon l'une quelconque des revendications précédentes, dans lequel le premier connecteur (110) est un connecteur ignifuge incluant une bride (155) et une saillie annulaire (150) s'étendant à partir de la bride (155) et étant configuré pour être connecté à un logement ignifuge.

10. Ensemble ignifuge de connexion de fibre optique (100) selon l'une quelconque des revendications précédentes, dans lequel la première sortie de fibre optique (132) et la seconde entrée de fibre optique (161) sont agencées à un angle d'environ 90° l'une par rapport à l'autre.
